# EUROPEAN PATENT APPLICATION

(11) **EP 2 902 675 A1**
(43) Date of publication of application: **05.08.2015**
(21) Application number: 13841183.0
(22) Date of filing: 07.06.2013
(51) Int. Cl.: F16H 63/32

(54) **STRUCTURE FOR REDUCING SHIFTING EFFORT IN HEAVY-DUTY TRANSMISSION**

(30) Priority: 27.09.2012 CN 201220498830 U
(71) Applicant: Shaanxi Fast Gear Co., Ltd., Xi'an, Shaanxi 710077 (CN)
(72) Inventor: YI, Yanming, Shaanxi 710119 (CN); YIN, Chongyi, Shaanxi 710119 (CN); LIU, Yi, Shaanxi 710119 (CN); YANG, Lin, Shaanxi 710119 (CN)
(74) Representative: Tappe, Udo
(86) International application number: PCT/CN2013/076904
(87) International publication number: WO 2014/048131

(57) **Abstract**

A structure for reducing the effort required to shift gears in a heavy-duty transmission. A shifting fork shaft (3) is arranged in the case (1) of a transmission. A linear bearing (5) is arranged between the outer surface of the shift fork shaft (3) and the inner surface of the case (1), thus transforming the sliding friction of a large area into the rolling friction of each rolling element of the linear bearing. The present structure effectively reduces the effort required to shift gears, improves shift smoothness and overcomes the poor wear-resistance and damage caused by pulling in conventional shift fork structures, while also reducing the likelihood of irreparable damage to the transmission case caused by over-grinding of holes on said case.

## Description

The present application claims the benefit of priority to Chinese Patent Application No. 201220498830.8, titled "STRUCTURE FOR REDUCING SHIFTING FORCE OF HEAVY-DUTY TRANSMISSION", filed with the Chinese State Intellectual Property Office on September 27, 2012, the entire disclosure of which is incorporated herein by reference.

### TECHNICAL FIELD

The present application relates to a transmission, and particularly to a structure for reducing shifting force of a heavy-duty transmission.

### BACKGROUND

In a conventional heavy-duty transmission, a shifting fork shaft directly cooperates with holes in a housing, and is subjected to a large friction resistance during the moving process, and in addition to the influence from the machining precision of the holes for the shifting fork shaft, the gear shifting process is not smooth. For reducing the friction resistance and enhancing smoothness of movement of the shifting fork shaft, a current method mainly adopted domestically is to improve the machining precision of the shifting fork shaft and the holes for the shifting fork shaft, however, practice has proven that, this method cannot fundamentally solve the problem that the shifting force is large.

In the conventional structure, the shifting fork shaft is in direct contact with the transmission housing, and during the gear shifting process, the axial movement of the shifting fork shaft generates a large sliding friction force, which increases the shifting force of the transmission. In order to reduce the sliding friction force, a shaft diameter of the shifting fork shaft is generally small, hence the shifting fork shaft is apt to be bent and deformed, and the deformation may further increase the shifting force of the transmission, and even results in stuck and breakage of the shifting fork shaft. Due to influences from the machining factors such as position precision and surface smoothness of the holes in the transmission housing, during the operation of this structure, adverse affects are apt to occur, such as surface strain of the shifting fork shaft, unsmoothed gear shifting process, and even a difficult gear shifting process, also, the holes in the transmission housing become larger due to wear, and as time passes, the holes fail to meet the using requirement, which causes scrapping of the transmission housing.

In view of the above defaults, it is necessary to provide a new structure to solve the above technical problems.

### SUMMARY

The technical problem to be solved by the present application is to provide a structure for reducing a shifting force of a heavy-duty transmission, which may effectively reduce the shifting force, improve a smoothness of a gear shifting process of the heavy-duty transmission, avoid the problems of the conventional structure, such as the shifting fork shaft has a poor wear resistance and is apt to be strained, and also avoid the likelihood of the scrapping caused when the holes in the transmission housing become larger due to wear.

For solving the above technical problems, the present application provides the following technical solutions.

A structure for reducing a shifting force of a heavy-duty transmission is provided, wherein a shifting fork shaft is installed in a transmission housing, and a linear bearing is installed between an outer surface of the shifting fork shaft and an inner surface of the housing.

As a preferred embodiment of the present application, a movement stroke of the linear bearing is larger than 0.5 times of a shifting stroke of the transmission.

As a preferred embodiment of the present application, an interference fit is provided between an outer ring of the linear bearing and the transmission housing.

As a preferred embodiment of the present application, during a gear shifting process of the shifting fork shaft, an inner enveloping circle of rollers of the linear bearing is slidably connected to the outer surface of the shifting fork shaft.

The structure for reducing the shifting force of the heavy-duty transmission according to the present application has at least the following advantageous. In the transmission housing according to the present application, a linear bearing is installed between the housing and the shifting fork shaft, thus during the gear shifting process, the sliding friction in a large area in the conventional structure is changed to rolling friction of each roller of the linear bearing, which effectively reduces the shifting force, improves the smoothness of the gear shifting process of the heavy-duty transmission, avoids the problems of the conventional structure, such as the shifting fork shaft has a poor wear resistance and is apt to be strained, and also avoids the likelihood of the scrapping caused when the holes in the transmission housing become larger due to wear.

### BRIEF DESCRIPTION OF THE DRAWINGS

Figure 1 is a sectional view showing the structure of a conventional transmission housing;
Figure 2 is a sectional view showing the structure of a transmission housing according to the present application; and
Figure 3 is a schematic view showing the structure of a linear bearing according to the present application.

### DETAILED DESCRIPTION

The present application is further described in detail hereinafter in conjunction with the drawings.

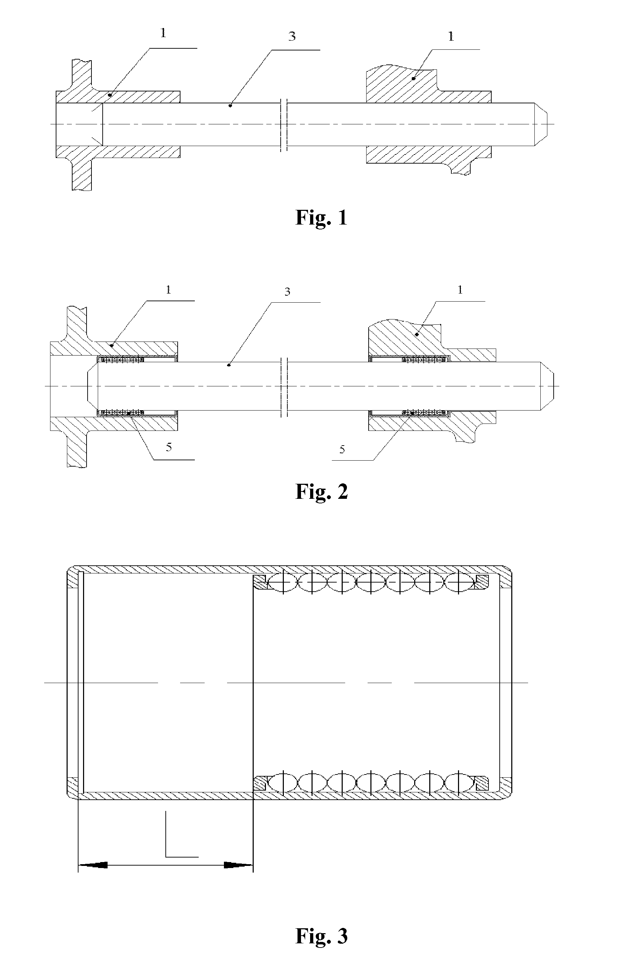

Reference is made to Figure 2, a structure for reducing a shifting force of a heavy-duty transmission is provided according the present application, a transmission housing 1 is provided with a shifting fork shaft 3, and a linear bearing 5 is installed between an outer surface of the shifting fork shaft and an inner surface of the housing.

Firstly, the specification of the linear bearing is determined according to a shaft diameter of the shifting fork shaft, a hole diameter of the transmission housing, and a shifting stroke of the transmission. A retainer of the linear bearing shown in Figure 3 is required to have a movement stroke L larger than 0.5 times of the shifting stroke of the transmission. In assembly, the linear bearing is pressed into the transmission housing by a press machine, to realize an interference fit between an outer ring of the linear bearing and the transmission housing. And then the shifting fork shaft is installed in place. In this way, the shifting fork shaft may slide freely during the gear shifting process, thereby ensuring a complete gear shift.

With this new structure that two linear bearings being respectively arranged at two ends of the transmission housing, the sliding friction in a large area in the conventional structure is changed to rolling friction of each roller of the linear bearing, which effectively reduces the shifting force, improves the smoothness of the gear shifting process of the heavy-duty transmission, avoids the problems of the conventional structure, such as the shifting fork shaft has a poor wear resistance and is apt to be strained, and also avoids the likelihood of the scrapping caused when the holes in the transmission housing become larger due to wear. Furthermore, the two linear bearings provide a good support for the shifting fork shaft, and in addition the shaft diameter of the shifting fork shaft is increased, thus the rigidity and strength of the shifting fork shaft are improved greatly, thereby effectively preventing serious faults such as breakage of the shifting fork shaft. In the whole structure, the linear bearing is a wear parts compared to the shifting fork shaft and the transmission housing, once the linear bearing fails, it is only required to replace the linear bearing, thereby remarkably reducing the one-time maintenance cost and the maintenance frequency.

The structure according to the present application may effectively reduce the fault rate of the transmission, and reduce the maintenance cost of the transmission, and also greatly improve the comfort of the gear shifting process and the operation safety of the transmission.

The above description is only an embodiment of the present application, rather than all embodiments or sole embodiment of the present application. Any equivalent variation made to the solutions of the present application by the ordinary skills in the art based on the specification of the present application are all deemed to fall into the scope defined by the claims of the present application.

## Claims

1. A structure for reducing a shifting force of a heavy-duty transmission, wherein a shifting fork shaft (3) is installed in a transmission housing (1), and a linear bearing (5) is installed between an outer surface of the shifting fork shaft and an inner surface of the housing.

2. The structure for reducing the shifting force of the heavy-duty transmission according to claim 1, wherein a movement stroke of a retainer of the linear bearing is larger than 0.5 times of a shifting stroke of the transmission.

3. The structure for reducing the shifting force of the heavy-duty transmission according to claim 1, wherein an interference fit is provided between an outer ring of the linear bearing and the transmission housing.

4. The structure for reducing the shifting force of the heavy-duty transmission according to claim 1 or claim 3, wherein during a gear shifting process of the shifting fork shaft, an inner enveloping circle of rollers of the linear bearing is slidably connected to the outer surface of the shifting fork shaft.
